# EUROPÄISCHE PATENTSCHRIFT

(11) **EP 4 312 498 B1**
(45) Veröffentlichungstag und Bekanntmachung des Hinweises auf die Patenterteilung: **26.06.2024**
(21) Anmeldenummer: 23709473.5
(22) Anmeldetag: 22.02.2023
(51) Int. Cl.: A01D 34/00, A01D 34/835

(54) **VORRICHTUNG ZUR PFLEGE VON RASENFLÄCHEN**
DEVICE FOR THE MAINTENANCE OF LAWNS
DISPOSITIF POUR L'ENTRETIEN DES GAZONS

(30) Priorität: 24.02.2022 AT 532022
(43) Veröffentlichungstag der Anmeldung: 07.02.2024
(73) Patentinhaber: AI-Weeder GmbH, 1120 Wien (AT)
(72) Erfinder: NEUGEBAUER, Katharina, 1230 Wien (AT)
(74) Vertreter: Keschmann, Marc
(86) Internationale Anmeldenummer: PCT/IB2023/051602
(87) Internationale Veröffentlichungsnummer: WO 2023/161807

(56) Entgegenhaltungen:
- EP-A1- 3 682 721
- CN-A- 109 511 356
- CN-A- 109 769 419
- CN-A- 110 326 423
- CN-A- 113 749 083

## Beschreibung

Die Erfindung betrifft eine Vorrichtung zur Pflege von Rasenflächen, die auf einer fahrbaren Einheit anordenbar ist. Die Erfindung betrifft weiters einen mit einer solchen Vorrichtung ausgestatteten Rasenmähroboter mit einem Mähwerk und einem autonom arbeitenden Fahrantrieb.

Um ein durch Unkraut, von Nadelbäumen abgefallenen Zapfen und Nadeln, oder von Laubbäumen abgefallenes Laub beeinträchtigtes Erscheinungsbild von Gärten zu verbessern, um Schädigung des Bodenbewuchses durch Abschattung und Übersäuerung des Bodens durch abgefallene Zapfen und Nadeln zu verhindern, und um Beschädigungen des Mähwerks eines Rasenmähers durch das Überfahren von Zapfen auf einer Rasenfläche zu verhindern, wird Unkraut entweder händisch gejätet oder mit chemischen Substanzen vernichtet, Zapfen, Nadeln und Laub werden durch Rechen entfernt oder händisch eingesammelt, und Laub wird durch Laubbläser weggeblasen. Nachteilig an manuellen Verfahren ist der hohe Arbeitsaufwand. Nachteilig an chemischen Verfahren sind die Kontamination des Bodens, die Schädigung von Pflanzen und Tieren, und die mögliche Kontamination von Grundwasser. Nachteilig an Laubbläsern sind der hohe Geräuschpegel sowie das Aufwirbeln von Staub und die damit hervorgerufene Feinstaubbelastung. Bekannte Roboter und Maschinen zum Jäten von Agrarflächen haben keine Funktion zum Sammeln von Ablagerungen. Nachteilig an den bekannten Robotern und Maschinen zum Jäten von Agrarflächen sind weiters ihre hohen Kosten, ihr hohes Gewicht und ihre Größe, die sie ungeeignet für den Einsatz in Gärten machen. CN 109 511 356 offenbart einen Roboter, der selbsttätig Unkraut entfernt.

Ziel der Erfindung ist ein Roboter der selbsttätig, ohne manuelle Unterstützung und ohne Einsatz chemischer Substanzen, Unkraut entfernt und unerwünschte Ablagerungen wie Zapfen, Nadeln, Blätter, oder auch Abfälle erkennt und aufsammelt. Weiters zielt die Erfindung darauf ab, die folgenden Vorgaben zumindest teilweise zu erfüllen:
- Keine Abgabe von Chemikalien beim Betrieb und abgasfreier Betrieb ("Grüne Technologie").
- Keine Erzeugung von Lärm und Feinstaub.
- Schutz des Mähwerks von Rasenmährobotern.
- Ergreifen unterschiedlich großer und unterschiedlich geformter Objekte wie zum Beispiel Zapfen und Nadeln mit demselben Greifer.
- Ergreifen langer Objekte, wie zum Beispiel Nadeln unabhängig von ihrer Ausrichtung.
- Robuste Funktion.
- Sichere Funktion.
- Kompakte Bauform.
- Geringe Herstellkosten.
- Bei Anbringung an einem Rasenmähroboter die galvanische Trennung von diesem oder alternativ die Nutzung dessen Energieversorgung.

Zur Lösung dieser Aufgabe sieht die Erfindung eine Vorrichtung zur Pflege von Rasenflächen vor, die auf einer fahrbaren Einheit anordenbar ist und eine auf die Rasenfläche ausrichtbare digitale Kamera, eine Steuervorrichtung und wenigstens ein von der Steuervorrichtung ansteuerbares, zur Rasenfläche motorisch absenkbares Werkzeug umfasst, wobei die Bilder der digitalen Kamera einem in der Steuervorrichtung implementierten Algorithmus zur Durchführung einer Objekterkennung zugeführt sind, sodass die Steuervorrichtung das Werkzeug bei Erkennen eines Objekts absenkt, um einen Arbeitsschritt am Objekt durchzuführen.

Das wenigstens eine Werkzeug kann zum Entfernen von Unkraut und/oder zum Aufsammeln eines aufzusammelnden Objekts, wie z.B. Zapfen, Nadeln, Laub oder Abfällen, auf der von der Vorrichtung befahrenen Rasenfläche ausgebildet sein. Beispielsweise kann ein eigenes Werkzeug zum Entfernen von Unkraut und ein eigenes Werkzeug zum Aufsammeln von Objekten, wie z.B. Zapfen, Nadeln, Laub oder Abfällen vorgesehen sein, wobei die beiden Werkzeuge gesondert voneinander ansteuerbar sind, um abgesenkt zu werden und ihre jeweiligen Arbeitsschritte auszuführen. Alternativ kann die Vorrichtung lediglich ein einziges Werkzeug aufweisen, welches entweder zum Entfernen von Unkraut oder zum Aufsammeln von Objekten, wie z.B. Zapfen, Nadeln, Laub oder Abfällen auf der von der Vorrichtung befahrenen Rasenfläche ausgebildet ist.

Detektiert die in der Steuervorrichtung implementierte Objekterkennung in den Bildern der Kamera Unkraut, wird die fahrbare Einheit oder der Rasenmähroboter gestoppt und anschließend so kommandiert, dass das Werkzeug abgesenkt und das Unkraut entfernt wird.

Detektiert die in der Steuervorrichtung implementierte Objekterkennung in den Bildern der Kamera ein aufzusammelndes Objekt, wie z.B. Zapfen, Nadeln, Laub oder Abfall, wird die fahrbare Einheit oder der Rasenmähroboter gestoppt und anschließend so kommandiert, dass das Werkzeug abgesenkt und das erkannte Objekt aufgesammelt wird.

Um eine optimale Positionierung dahingehend zu gewährleisten, dass das Werkzeug im abgesenkten Zustand genau auf dem oder oberhalb des detektierten Objekt(s) zu liegen kommt, ist es erfindungsgemäß vorgesehen, dass das Werkzeug im abgesenkten Zustand in einem Erfassungsbereich der Kamera angeordnet ist, wobei einem Kontaktpunkt des Werkzeugs mit der Rasenfläche eine konstante Bildkoordinate des Kamerabildes zugeordnet ist. Die Position des abgesenkten Werkzeugs und des Erfassungsbereichs der Kamera sind somit derart aufeinander abgestimmt, dass der Kontaktpunkt des Werkzeugs an einer vordefinierten Stelle innerhalb des Erfassungsbereichs angeordnet ist. Dies ermöglicht es, dem Kontaktpunkt des Werkzeugs eine vordefinierte Bildkoordinate des Kamerabildes zuzuordnen.

Die Positionierung des Werkzeugs relativ zum detektierten Objekt erfolgt bevorzugt mittels des Fahrantriebs der fahrbaren Einheit, wie z.B. des Rasenmähroboters. Dies ermöglicht eine einfache Konstruktion, bei welcher das Werkzeug selbst lediglich absenkbar und anhebbar an der Vorrichtung gelagert sein und keine weiteren Freiheitsgrade bewerkstelligen muss. Die Ansteuerung der fahrbaren Einheit in einer Weise, dass das Werkzeug nach dem Absenken auf oder über dem detektierten Objekt zu liegen kommt, gelingt gemäß einer bevorzugten Ausbildung der Erfindung dadurch, dass der Algorithmus ausgebildet ist, um den Mittelpunkt eines erkannten Objekts zu detektieren, wobei die Steuervorrichtung eingerichtet ist, um aus einer laufenden Ermittlung des Abstands zwischen der konstanten Bildkoordinate des Kontaktpunkts des Werkzeugs und dem Mittelpunkt des erkannten Objekts Steuerbefehle an die fahrbare Einheit zur Annäherung an das Objekt auszugeben, bis der Abstand unter einem vorgegebenen Grenzwert liegt. Der Mittelpunkt des erkannten Objekts kann beispielsweise als Mittelpunkt eines das erkannte Objekt umschließenden Rechtecks oder Quadrats detektiert werden.

Bevorzugt ist die Steuervorrichtung als Einplatinencomputer ausgebildet. Dies gewährleistet einerseits einen einfachen und kostengünstigen Aufbau und andererseits eine ausreichende Rechenkapazität, welche die bildbasierte Objekterkennung ermöglicht. Unter einem Einplatinencomputer ist hierbei ein Computersystem zu verstehen, bei dem sämtliche zum Betrieb nötigen elektronischen Komponenten auf einer einzigen Leiterplatte zusammengefasst sind.

Um eine zuverlässige, aber mit einer begrenzten Rechenkapazität auskommende und daher einen geringen Energieverbrauch verursachende Objekterkennung zu ermöglichen, erfolgt die Objekterkennung bevorzugt durch ein Deep-Learning-Verfahren mittels eines in der Steuervorrichtung, insbesondere am Einplatinencomputer implementierten Convolutional Neural Networks. Die Gewichtungen und Bias-Werte der Neuronen des Netzes sind hierbei bevorzugt mittels Transfer Learning anhand von mehr als 2000 Bildern der gesuchten Objektklassen wie Unkraut, Zapfen oder Nadeln trainiert. Für jedes untersuchte Bild der digitalen Kamera gibt das Convolutional Neural Network eine Matrix aus, die für jedes erkannte Objekt einen Index der Objektklasse, die Bildkoordinaten des umschließenden Rechtecks, sowie die Erkennungswahrscheinlichkeit der Objektklasse enthält.

Überschreitet die Erkennungswahrscheinlichkeit eines Objektes einen Schwellwert von beispielsweise 50%, wird das Objekt als erkannt eingestuft, und es wird ein allfälliger Fahrvorgang der fahrbaren Einheit gestoppt und der Kommandiervorgang eingeleitet oder, wenn er bereits im Gange ist, fortgesetzt. Jenes erkannte Objekt, das die kürzeste Distanz zum Roboter aufweist, wird für den Kommandiervorgang zum folgenden Jät- oder Greifvorgang ausgewählt. Der Mittelpunkt seines umschließenden Rechtecks bildet die Ausgangskoordinate für den Kommandiervorgang.

Wie bereits erwähnt, kann das absenkbare Werkzeug als Jätvorrichtung zum Jäten von Unkraut ausgebildet sein. Die Jätvorrichtung kann beispielsweise eine rotierende Klinge oder einen rotierenden Schneidfaden aufweisen. Sobald durch die Objekterkennung im Erfassungsbereich der Kamera Unkraut erkannt wird, veranlasst die Steuervorrichtung, dass sich der geometrische Kontaktpunkt der Jätvorrichtung mit dem Boden über dem detektierten Unkraut befindet. Es wird der Arm mit der Jätvorrichtung ausgefahren bzw. abgesenkt, und die Jätvorrichtung aktiviert, die das Unkraut von seiner Wurzel abtrennt. Danach wird die Jätvorrichtung wieder gestoppt und eingefahren, und die Fläche weiter befahren. Obwohl ein Großteil der Wurzel im Boden verbleibt, ist der weitere Wuchs und damit auch die Vermehrung des Unkrauts gestoppt. Nach einigen solchen Abtrennvorgängen treibt die Wurzel nicht wieder aus und verrottet ohne weitere Eingriffe im Boden.

Wie bereits erwähnt, kann das absenkbare Werkzeug auch als Greifer zum Ergreifen und Aufsammeln von umherliegenden Objekten, wie z.B. Zapfen, Nadeln, Laub oder Abfall, ausgebildet sein. Eine vorteilhafte Ausgestaltung des Greifers sieht vor, dass der Greifer an einem um eine im Wesentlichen horizontale Achse verschwenkbaren Arm angeordnet ist. Der Greifer kann dadurch in einfacher Weise abgesenkt und wieder angehoben werden.

Um eine Funktionsweise des Greifers zu ermöglichen, bei der verschiedenartig geformte Objekte sicher ergriffen werden können, ist bevorzugt vorgesehen, dass der Greifer wenigstens zwei, insbesondere drei parallele Greifelemente aufweist, die zueinander und voneinander weg bewegbar geführt sind. Dabei ist die Führung der Greifelemente bevorzugt derart gestaltet, dass die Greifelemente während des Greifvorgangs in ihrer parallelen Ausrichtung verbleiben, sodass im Gegensatz zu Greifern mit zueinander schwenkbaren, d.h. winkelveränderlichen, z.B. zangenartig bewegbaren Greifelementen keine vertikalen Kräfte in das zu ergreifende Objekt eingeleitet werden.

Die Kontaktflächen der Greifelemente können zur Erhöhung der Reibkraft vorzugsweise anodisiert sein.

Detektiert die in der Steuervorrichtung, insbesondere im Einplatinencomputer implementierte Objekterkennung ein aufzusammelndes Objekt, wie z.B. Zapfen, Nadeln, Laub oder Abfall, wird die fahrbare Einheit gestoppt und so kommandiert, dass der geometrische Mittelpunkt des abgesenkten Greifers sich über dem Objekt befindet. Danach kann der Arm mit dem geöffneten Greifer abgesenkt und der Greifer geschlossen werden, sodass das Objekt gefasst wird. Der Arm mit dem Greifer und dem gegriffenen Objekt kann anschließend angehoben werden.

Zur Zwischenlagerung aufgesammelter Objekte, umfasst die Vorrichtung gemäß einer bevorzugten Weiterbildung weiters einen Sammelbehälter, welcher unterhalb einer Abwurfposition des Greifers angeordnet ist. Sobald der Greifer samt dem ergriffenen Objekt über den Sammelbehälter angehoben wurde, bewirkt das anschließende Öffnen des Greifers ein Abfallen des Objekts in den Sammelbehälter.

Wird lediglich die Funktion des Unkrautentfernens benötigt, entfällt der Arm mit dem Greifer. Wird lediglich die Funktion des Sammelns benötigt, entfällt der Arm mit der Jätvorrichtung. In einer alternativen Ausführung ist die Jätvorrichtung nicht auf einem eigenen Arm angebracht, sondern am Arm des Greifers oder an einem Schenkel des Greifers angebracht.

Durch die Erfindung wird eine roboterartige Vorrichtung zum Unkrautentfernen und zum Sammeln von Ablagerungen ermöglicht, die eine Reihe von Vorteilen mit sich bringt:
- Keine Abgabe von Chemikalien beim Betrieb, und abgasfreier Betrieb (?Grüne Technologie"): Die Unkrautvertilgung erfolgt rein mechanisch, sämtliche Antriebe erfolgen elektromotorisch.
- Keine Erzeugung von Lärm und Feinstaub: Das Wirkprinzip beruht weder Saugwirkung noch auf Blaswirkung, und erzeugt somit an keiner Stelle schnell strömende Medien, die Lärm oder Feinstaubemission verursachen.
- Schutz des Mähwerks von Rasenmährobotern: Ist die Vorrichtung auf einen Rasenmähroboter aufgesetzt, dann ist der Bildbereich der Kamera so ausgeführt, dass er den Mähstreifen vor dem Rasenmähroboter abdeckt, und der Roboter erkennt und entfernt am Rasen liegende Zapfen, bevor der Rasenmähroboter diesen Bereich überfährt.
- Ergreifen unterschiedlich großer und unterschiedlich geformter Objekte, wie zum Beispiel Zapfen und Nadeln mit demselben Greifer: Die Ausführung des Greifers mit radial schließenden Greifelementen bzw. Schenkeln führt zu einer Kompensation der Greifkräfte untereinander. Im Unterschied zu auf dem Prinzip von Gelenkzangen ausgeführten Greifern müssen Greifkräfte nicht durch Reibung kompensiert werden. Somit ist die Greiffunktion nicht durch Reibwinkel begrenzt. In der beschriebenen Ausführung des Greifers mit radial schließenden Schenkeln wird lediglich die Gewichtskraft des gegriffenen Objekts durch Reibung aufgenommen. Der Greifer greift große Objekte wie Zapfen und kleine Objekte wie Nadeln gleichermaßen radial.
- Ergreifen langer Objekte, wie zum Beispiel Nadeln unabhängig von ihrer Ausrichtung: Wird das zu greifende, lange Objekt zwischen den radial schließenden Greifelementen bzw. Schenkeln des Greifers in seiner offenen Stellung platziert, führt ein Schließen des Greifers zu einer Ausrichtung des langen Objektes zwischen einem Greifelement und einem Paar der übrigen zwei Greifelemente, und schließlich zu einem Ergreifen des Objektes. Der Greifer greift somit lange Objekte, wie zum Beispiel Nadeln, unabhängig davon, in welcher Richtung sie liegen.
- Robuste Funktion: Wird das zu greifende Objekt zwischen den radial schließenden Greifelementen des Greifers in seiner offenen Stellung platziert, führt ein Schließen des Greifers zu einer Zentrierung eines runden Objekts. Die Greiffunktion wird somit auch bei einer ungenauen Positionierung des Greifers über dem zu greifenden Objekt erfüllt.
- Sichere Funktion: die laufend ausgeführten Objekterkennungs-Algorithmen erkennen das Unkraut und/oder die zu greifenden Objekte. Der Jätvorgang und der Greifvorgang kann unmittelbar gestoppt werden, sobald unbekannte Elemente im Bildbereich auftauchen. Eine weitere Absicherung kann durch Anbringung handelsüblicher pyroelektrischer Näherungssensoren am Roboter erzielt werden, die bei Annäherung von Lebewesen den Jätvorgang und den Greifvorgang unterbrechen.
- Kompakte Bauform: Ist die Vorrichtung auf einen Rasenmähroboter aufgesetzt, überragt diese den Rasenmähroboter bei eingezogenen Armen an seinem Umfang nicht oder lediglich unwesentlich. Der einhüllende Radius des geöffneten Greifers überragt die des größten greifbaren Radius lediglich um die radiale Ausdehnung des Greifelements.
- Geringe Herstellkosten: Die Möglichkeit des Aufsetzens auf einen bei einem Benutzer bereits vorhandenen oder in der Anschaffung geplanten Rasenmähroboter erspart die Herstellkosten für ein Fahrwerk. Bei einer Ausführung mit elektrischer Verbindung zu diesem Rasenmähroboter kann auch dessen Energiespeicher (Akkumulator) und dessen Ladeinfrastruktur vom Roboter mitbenutzt und deren Ausführung am Roboter eingespart werden. Die beschriebene Kinematik führt durch die Kopplung der Bewegungen der Greifelemente im Greifer, und die beschriebene Trajektorie der Jätvorrichtung zu einem Minimum an motorisierten Bewegungsachsen, und der damit verbundenen Herstellkosten. Die Trajektorie der Jätvorrichtung ist bevorzugt im flachen Winkel zur Horizontalen angeordnet, so dass für die waagrechte Komponente der Bewegung lediglich das Reibmoment überwunden werden muss. Das Gewicht muss lediglich für die lotrechte Komponente der Bewegung überwunden werden. Das erlaubt für den Arm der Jätvorrichtung einen kompakten und kostengünstigen Aktuator mit geringem Drehmoment.
- Bei Anbringung an einem Rasenmähroboter ist ein galvanisch getrennter Betrieb von diesem möglich. Die Kommandierung des Roboters erfolgt in dieser Ausführung mittels WLAN. Es ist dann kein physischer Eingriff ins Innere des Rasenmähroboters nötig. Eine damit möglicherweise verbundene Wertminderung des Rasenmähroboters, und ein möglicher Verlust des Garantieanspruchs sind damit verhindert.

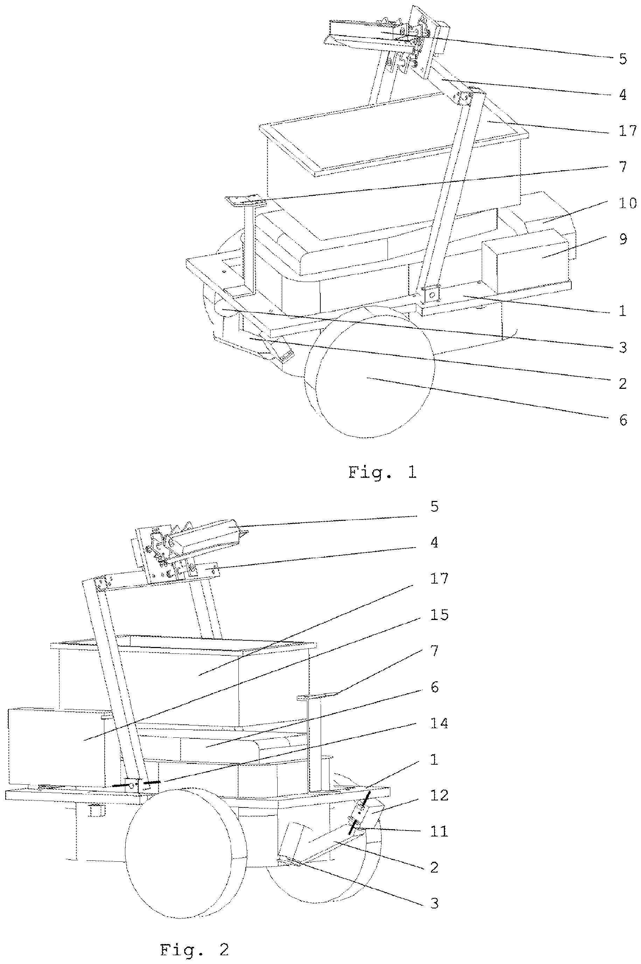

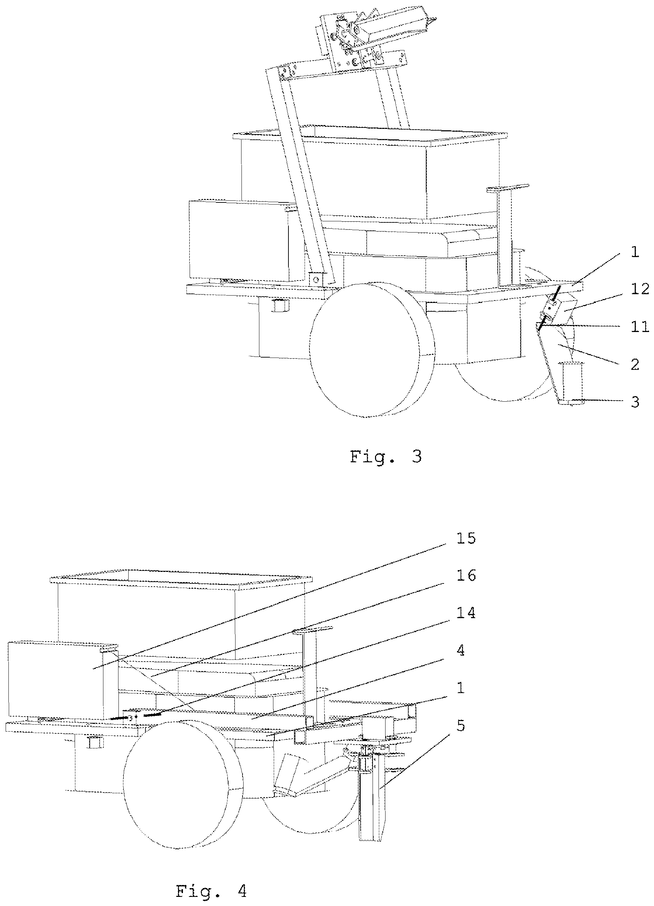

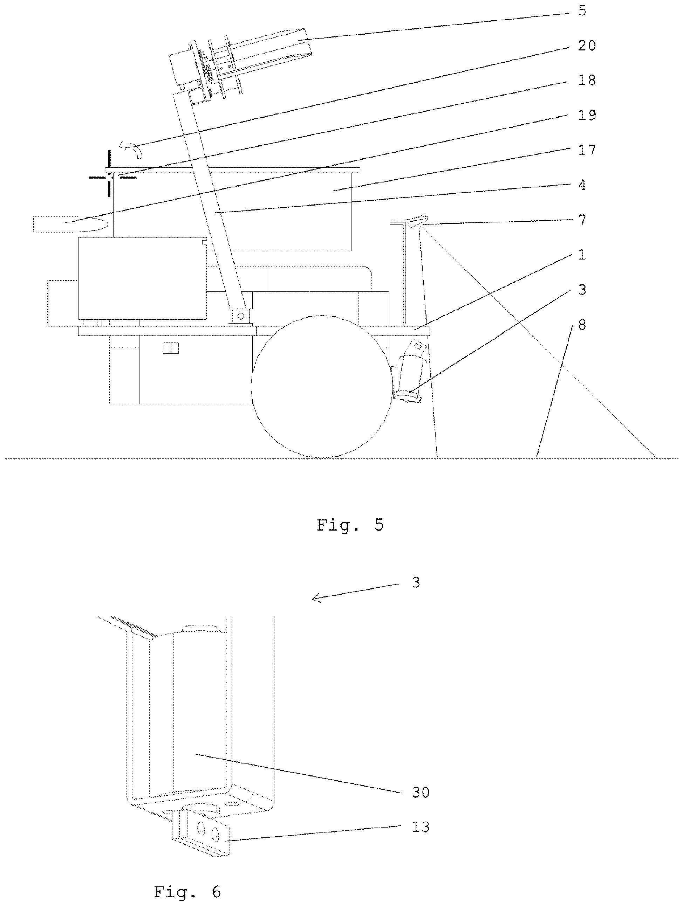

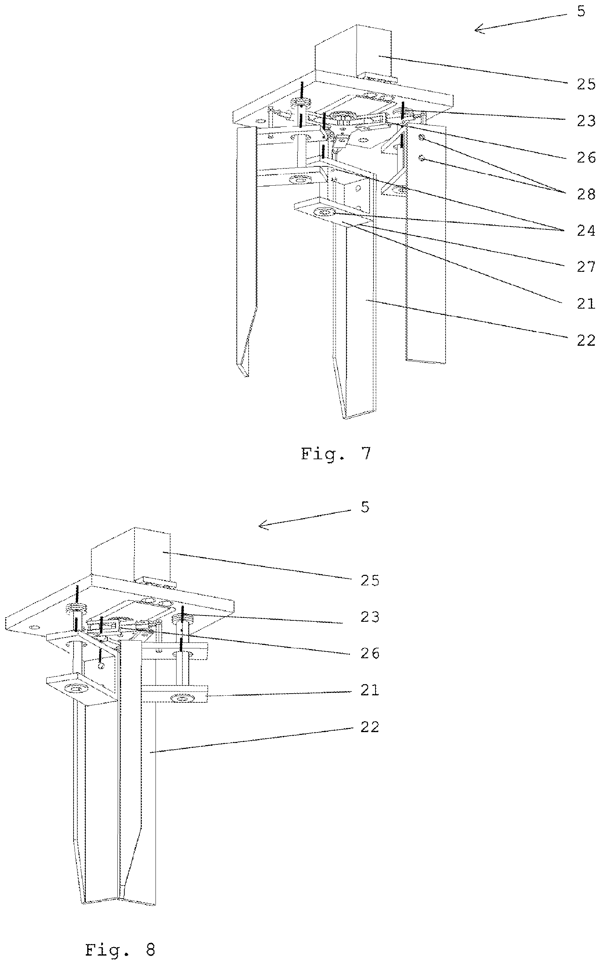

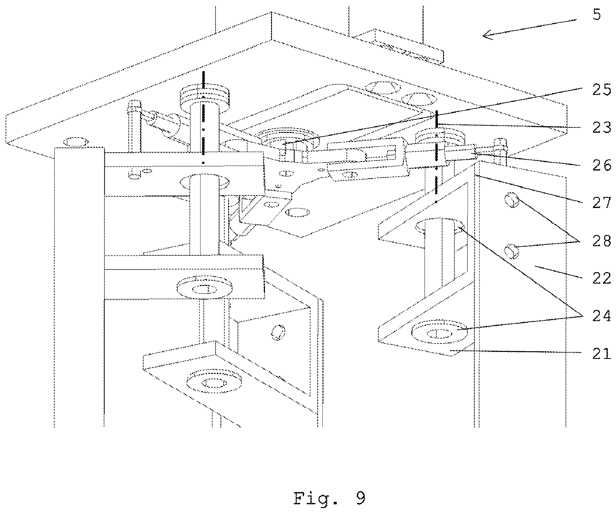

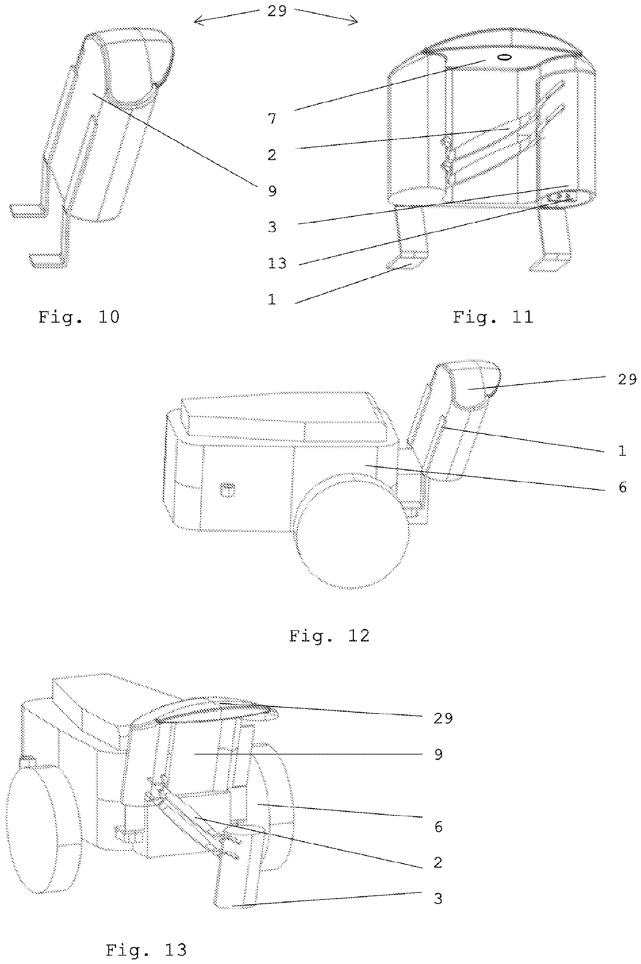

Weitere Merkmale und Vorteile der Erfindung ergeben sich aus der nachfolgenden Beschreibung eines bevorzugten, den Schutzbereich nicht beschränkenden, Ausführungsbeispiels der Erfindung unter Bezugnahme auf die angeschlossenen Zeichnungen. Es zeigen Fig. 1 und 2 perspektivische Ansichten des Roboters, Fig. 3 zeigt eine perspektivische Ansicht des Roboters mit ausgeklapptem Arm der Jätvorrichtung, Fig. 4 zeigt eine perspektivische Ansicht des Roboters mit dem ausgeklappten Arm des Greifers, Fig. 5 zeigt eine Seitenansicht des Roboters, Fig. 6 eine perspektivische Ansicht der Jätvorrichtung, Fig. 7 eine perspektivische Ansicht des Greifers im geöffneten Zustand, Fig. 8 eine perspektivische Ansicht des Greifers im geschlossenen Zustand, Fig. 9 eine perspektivische Detailansicht des Greifers im geöffneten Zustand, Fig. 10 und 11 das Zusatzmodul für Rasenmäher für die Ausführungsform als Roboter zum Unkrautentfernen als Nachrüstung für bestehende Rasenmähroboter, Fig. 12 einen mit dem Zusatzmodul nachgerüsteten Rasenmähroboter und Fig. 13 diesen mit dem Zusatzmodul nachgerüsteten Rasenmähroboter mit dem ausgefahrenen Arm der Jätvorrichtung.

Der Roboter besteht aus einem Grundrahmen 1, einem davon um eine geneigte Achse motorisch ausfahrbaren Arm 2 mit Jätvorrichtung 3, und einem weiteren motorisch bewegbaren Arm 4 mit einem Greifer 5.

Der Grundrahmen 1 ist auf einen Rasenmähroboter 6 aufgesetzt. In einer alternativen Ausführungsform ist der Grundrahmen mit einem eigenen Fahrwerk als mobile Plattform ausgeführt.

Die Kamera 7 nimmt Bilder vom Bereich 8 in Fahrtrichtung vor dem Roboter auf, die mittels Objekterkennung mit einer Frequenz von mindestens 3 Hz kontinuierlich ausgewertet werden.

Die Kamera 7 ist mit dem Grundrahmen 1 verbunden, mit dem auch der Arm 2 der Jätvorrichtung 3 gelenkig verbunden ist. Dem geometrischen Kontaktpunkt der ausgefahrenen Jätvorrichtung mit dem Boden ist eine konstante Bildkoordinate des Kamerabildes zugeordnet, die die Zielkoordinate für den Kommandiervorgang zum Jäten bildet. Mit dem Grundrahmen 1 ist auch der Arm 4 des Greifers 5 gelenkig verbunden. Dem geometrischen Mittelpunkt des abgesenkten Greifers ist ebenfalls eine konstante Bildkoordinate des Kamerabildes zugeordnet, die die Zielkoordinate für den Kommandiervorgang zum Greifen bildet.

Zum Kommandieren des Roboters an die Zielkoordinate wird die durch die Objekterkennung kontinuierlich ermittelte Ausgangskoordinate als Feedbacksignal zur Steuerung der Roboterbewegung benutzt. Abhängig von der Distanz der Ausgangskoordinate von der Zielkoordinate wird am linken und am rechten Radantrieb des Rasenmähroboters 6 ein Antriebsmoment aufgebracht, gleichsinnig zur Verringerung der Distanz von Ausgangskoordinate zu Zielkoordinate in Fahrtrichtung des Roboters, gegensinnig zur Verringerung der Distanz von Ausgangskoordinate zu Zielkoordinate normal zur Fahrtrichtung des Roboters. Befindet sich die Ausgangskoordinate innerhalb eines Toleranzradius von etwa fünf mm um die Zielkoordinate, gilt das Ziel als erreicht, es wird der entsprechende Arm zum Jäten oder zum Greifen abgesenkt und der Jät- oder Greifvorgang durchgeführt.

Werden keine weiteren Objekte im Kamerabild erkannt, wird der zuvor gestoppte Fahrvorgang des Rasenmähroboters 6, und damit sein Mähen, sein Suchen der Ladestation, oder sein Wenden fortgesetzt.

Der Einplatinencomputer ist mittels WLAN oder in einer alternativen Ausführungsform mittels mobiler Datenverbindung wie zum Beispiel LTE mit dem Internet verbunden. Der Benutzer bedient den Roboter vorranging mit einem Browser oder einer App am Mobiltelefon, Tablet oder am PC. Der Datenaustausch mit dem Rasenmähroboter einschließlich der beschriebenen Kommandierung seiner Radantriebe zum Ansteuern der Zielkoordinate erfolgt ebenfalls über das WLAN.

In einer alternativen Ausführungsform besteht eine Kabelverbindung mit dem Rasenmähroboter zum Datenaustausch über eine Datenleitung und/oder zur Stromversorgung des Roboters durch den Akkumulator des Rasenmähroboters. Wird in einer solchen Ausführung der Akkumulator des Rasenmähroboters durch den Roboter mitbenutzt entfällt der Akkumulator 10 zur selbständigen Energieversorgung des Roboters.

Zum Aktuieren der Antriebe für die zwei Arme 2 und 4 und der Antriebe der Jätvorrichtung 3 und des Greifers 5 sowie, falls der Grundrahmen in einer alternativen Ausführungsform nicht auf einem Rasenmähroboter aufgesetzt ist, des Fahrwerks dient eine im selben Gehäuse 9 angebrachte Motorkontrollelektronik, die wie auch der Einplatinencomputer aus einem Akkumulator 10 am Roboter gespeist wird.

Am Grundrahmen 1 ist der Arm 2 angebracht, an dessen Ende sich eine Jätvorrichtung 3 befindet. Dieser Arm ist um eine geneigte Achse 11 drehbar, die mit einem elektrischen Antrieb 12 verbunden ist. Die Lage der Achse 11 ist so gewählt, dass beim Ausfahren des Armes 2 sich die Jätvorrichtung 3 vom Grundrahmen 1 wegbewegt, und sie sich mit der gleichen Bewegung zum Boden absenkt. Die Absenkung erfolgt dabei an eine Stelle, die vom Bildbereich 8 der Kamera 7 erfasst wird.

Die Jätvorrichtung 3 besteht aus einer drehbaren Klinge 13, die durch den Elektromotor 30 angetrieben wird. In einer alternativen Ausführungsform ist die Jätvorrichtung mit einem Schneidfaden anstelle der Klinge 13 versehen.

Am Grundrahmen 1 ist ein weiterer Arm 4 angebracht. Dieser ist zweiseitig um die Achse 14 drehbar gelagert. In einer alternativen Ausführung ist dieser Arm 4 einseitig gelagert um die Achse 14 drehbar ausgeführt. An diesem Arm 4 ist ein Greifer 5 angebracht. Die Drehung wird durch einen elektrischen Antrieb 15 mittels Zugseil 16 aktuiert. Die Lage der Achse 14 ist so gewählt, dass durch eine Drehung des Armes 4 der Greifer 5 von einer Position oberhalb des Grundrahmens 1 in eine Position vor den Roboter verfahren wird, die vom Bildbereich 8 der Kamera 7 erfasst wird.

Am Grundrahmen 1 ist unterhalb der oberen Position des Greifers 5 ein Sammelbehälter 17 angebracht. Vom Greifer losgelassene herabfallende Gegenstände fallen in diesen Sammelbehälter 17.

In einer weiteren Ausführung ist der Sammelbehälter 17 mit dem Grundrahmen 1 an einer nahe der Oberkante des Sammelbehälters waagrecht, rechtwinkelig zur Fahrtrichtung verlaufenden Drehachse 18 gelenkig verbunden. Eine Entleerstation, die mit der Ladestation verbunden ist, oder unabhängig von der Ladestation ausgeführt ist, ist mit einer Kulisse 19 versehen, die unterhalb des Niveaus dieser Drehachse angeordnet ist. Das Einfahren in die Entleerstation beziehungsweise in die Ladestation gegen die Kulisse 19 bewirkt aufgrund der Kollision mit der Kulisse 19 eine Verdrehung des Sammelbehälters 17 in die durch den Pfeil 20 markierte Richtung und dabei ein Entleeren des Inhalts des Sammelbehälters 17. Der Arm 4 mit dem Greifer 5 ist bei einem solchen Vorgang aus dem Bewegungsbereich des Sammelbehälters weggeklappt, sodass keine Kollision auftritt.

Der Greifer 5 besteht aus drei gleichartigen, radial zusammenwirkenden Schenkeln, bestehend aus je einem Verbindungsstück 21 und je einem Greifelement 22. Die Schenkel sind jeweils um eine zu den Greifelementen 22 versetzte Drehachse 23 mittels Kugellagerpaaren 24 drehbar angeordnet. Eine Verdrehung der Schenkel um die Drehachse 23 bewirkt eine Bewegung der Greifelemente 22 entlang einer Kreisbahn. Die Drehachsen der drei Schenkel sind an einem gemeinsamen Teilkreis in etwa gleichem Abstand zueinander angeordnet, sodass eine aus der Verdrehung der Schenkel resultierende Bewegung ihrer Greifelemente 22 ein Öffnen oder ein Schließen der drei Greifelemente 22 zueinander bewirkt. In der Mitte des Teilkreises ist ein elektrischer Antrieb 25 angeordnet.

Die Übertragung der Drehbewegung zwischen dem elektrischen Antrieb 25 und den drei Schenkeln erfolgt mittels Schubstangen 26. In der gezeigten Ausführung sind die Schubstangen 26 zweiteilig ausgeführt. Der mit dem Antrieb drehbar verbundene Teil der Schubstange ist mit einem Innengewinde versehen, der mit dem Schenkel drehbar verbundene Teil der Schubstange ist mit einem Außengewinde versehen. Eine Verdrehung der Schubstangenteile zueinander bewirkt eine Längenänderung der Schubstange und erlaubt so eine Justierung des Kontaktpunkts der drei Schenkel im geschlossenen Zustand des Greifers. In einer alternativen Ausführungsform erfolgt die Übertragung der Drehbewegung zwischen dem Antrieb und den drei Schenkeln durch ein Zahnradgetriebe, bei dem die Schenkel mit Zahnrädern oder Zahnradsegmenten versehen sind, die in ein zentrales Sonnenrad zwischen den Zahnrädern der Schenkel oder in ein Hohlrad eingreifen, das die Zahnräder der Schenkel umschließt. Die Justierung des Kontaktpunktes zwischen den Schenkeln im geschlossenen Zustand des Greifers erfolgt in dieser Ausführung durch den Zusammenbau der Zahnräder in der entsprechenden Winkelstellung.

In der gezeigten Ausführung ist der Antrieb zentral angeordnet. In einer alternativen Ausführung ist einer der drei Schenkel vom Antrieb direkt angetrieben. Die Übertragung der Drehbewegung zwischen dem direkt angetriebenen Schenkel und den beiden anderen Schenkel erfolgt in dieser alternativen Ausführung mittels der beschriebenen Schubstangen oder den beschriebenen Zahnradgetrieben.

Die Schenkel sind zweiteilig ausgeführt. Die mit den Schubstangen 26 drehbar verbundenen Verbindungsstücke 21 der Schenkel sind mit Planflächen 27 versehen, an die jeweils ein Greifelement 22 mittels einer Schraubenverbindung in der Bohrung 28 geklemmt ist. Ein Verschieben der Greifelemente 22 entlang der Planflächen 27 ermöglicht eine Justierung der Parallelität der Greifelemente 22 der drei Schenkel, um präzises Schließen entlang einer Berührlinie zu erzielen. Die Greifelemente 22 besitzen einen L-förmigen Querschnitt, um hohe Biegesteifigkeit und eine Lage ihres Schubmittelpunktes in Klemmkraftrichtung zu erzielen, und somit ihre Verdrehung bei Aufbringung der Greifkraft zu verhindern. Die Greifelemente 22 sind anodisiert, um hohen Reibkoeffizient zwischen Greifelement und zu greifendem Objekt zu erzielen sowie hohe Verschleißfestigkeit aufzuweisen.

In einer Ausführungsform als Roboter zum Unkrautentfernen ist ein Zusatzmodul 29 an einem bestehenden Rasenmähroboter 6 angebracht. In diesem Zusatzmodul 29 sind die Kamera 7 und ein Arm 2 zur Absenkung der Jätvorrichtung 3 vorgesehen. Der Einplatinencomputer und die Motorkontrollelektronik sind im Gehäuse 9 untergebracht. Das Zusatzmodul ist mit dem Rahmen 1, der in dieser Ausführungsform wesentlich kompakter ist, mit dem Rasenmähroboter 6 verbunden.

## Patentansprüche

1. Vorrichtung zur Pflege von Rasenflächen, die auf einer fahrbaren Einheit anordenbar ist und eine auf die Rasenfläche ausrichtbare digitale Kamera (7), eine Steuervorrichtung und wenigstens ein von der Steuervorrichtung ansteuerbares, zur Rasenfläche motorisch absenkbares Werkzeug (3,5) umfasst, wobei die Bilder der digitalen Kamera (7) einem in der Steuervorrichtung implementierten Algorithmus zur Durchführung einer Objekterkennung zugeführt sind, sodass die Steuervorrichtung das Werkzeug (3,5) bei Erkennen eines Objekts absenkt, um einen Arbeitsschritt am Objekt durchzuführen, **dadurch gekennzeichnet, dass** das Werkzeug (3,5) im abgesenkten Zustand in einem Erfassungsbereich der Kamera (7) angeordnet ist, wobei einem Kontaktpunkt des Werkzeugs (3,5) mit der Rasenfläche eine konstante Bildkoordinate des Kamerabildes zugeordnet ist.

2. Vorrichtung nach Anspruch 1, **dadurch gekennzeichnet, dass** der Algorithmus ausgebildet ist, um den Mittelpunkt eines erkannten Objekt zu detektieren, und wobei die Steuervorrichtung eingerichtet ist, um aus einer laufenden Ermittlung des Abstands zwischen der konstanten Bildkoordinate des Kontaktpunkts des Werkzeugs (3,5) und dem Mittelpunkt des erkannten Objekts Steuerbefehle an die fahrbare Einheit zur Annäherung an das Objekt auszugeben, bis der Abstand unter einem vorgegebenen Grenzwert liegt.

3. Vorrichtung nach Anspruch 1 oder 2, **dadurch gekennzeichnet, dass** die Steuervorrichtung als Einplatinencomputer ausgebildet ist.

4. Vorrichtung nach einem der Ansprüche 1 bis 3, **dadurch gekennzeichnet, dass** das Werkzeug als Jätvorrichtung (3) ausgebildet ist.

5. Vorrichtung nach Anspruch 4, **dadurch gekennzeichnet, dass** die Jätvorrichtung (3) eine oder mehrere rotierende Klingen (13) oder einen rotierenden Schneidfaden aufweist.

6. Vorrichtung nach Anspruch 4 oder 5, **dadurch gekennzeichnet, dass** die Jätvorrichtung (3) an einem um eine zur Vertikalen schräg bis hin zu etwa waagrecht verlaufende Achse (11) verschwenkbaren Arm (2) angeordnet ist.

7. Vorrichtung nach einem der Ansprüche 1 bis 3, **dadurch gekennzeichnet, dass** das Werkzeug als Greifer (5) ausgebildet ist.

8. Vorrichtung nach Anspruch 7, **dadurch gekennzeichnet, dass** der Greifer (5) an einem um eine im Wesentlichen horizontale Achse verschwenkbaren Arm (4) angeordnet ist.

9. Vorrichtung nach Anspruch 7 oder 8, **dadurch gekennzeichnet, dass** der Greifer (5) wenigstens zwei, insbesondere drei parallele Greifelemente (22) aufweist, die zueinander und voneinander weg bewegbar geführt sind.

10. Vorrichtung nach Anspruch 9, **dadurch gekennzeichnet, dass** die Bewegung der Greifelemente (22) entlang eines jeweiligen Kreisbogens verläuft, wobei den jeweiligen Mittelpunkt der Kreisbögen bildende Schwenkachsen (23) gleichmäßig entlang eines Kreises und zueinander parallel angeordnet sind.

11. Vorrichtung nach Anspruch 10, **dadurch gekennzeichnet, dass** ein motorisch um die Achse des Kreises drehbar angetriebenes Antriebsglied (25) vorgesehen ist, welches mit jedem Greifelement (22) antriebsmäßig verbunden ist, um dieses entlang des jeweiligen Kreisbogens anzutreiben.

12. Vorrichtung nach Anspruch 9, 10 oder 11, **dadurch gekennzeichnet, dass** Kontaktflächen der Greifelemente (22) anodisiert sind.

13. Vorrichtung nach einem der Ansprüche 7 bis 12, **dadurch gekennzeichnet, dass** die Vorrichtung weiters einen Sammelbehälter (17) umfasst, welcher unterhalb einer Abwurfposition des Greifers (5) angeordnet ist.

14. Vorrichtung nach einem der Ansprüche 1 bis 13, **dadurch gekennzeichnet, dass** ein elektromotorischer Antrieb zum Absenken und Anheben des wenigstens einen Werkzeugs (3,5) vorgesehen ist.

15. Vorrichtung nach einem der Ansprüche 1 bis 14, **dadurch gekennzeichnet, dass** die Vorrichtung als integraler Bestandteil oder als Nachrüstmodul zur Anbringung auf einem Rasenmähroboter (6) als fahrbare Einheit ausgebildet ist.

16. Rasenmähroboter mit einem Mähwerk und einem autonom arbeitenden Fahrantrieb, wobei der Rasenmähroboter (6) mit einer Vorrichtung nach einem der Ansprüche 1 bis 15 ausgestattet ist.

17. Rasenmähroboter nach Anspruch 16, **dadurch gekennzeichnet, dass** die digitale Kamera (7) auf die in Fahrrichtung vor dem Mähwerk liegende Rasenfläche gerichtet ist.

## Claims

1. Device for maintaining lawns, which can be arranged on a mobile unit and comprises a digital camera (7) which can be directed at the lawn, a control device and at least one tool (3, 5) which can be actuated by the control device and can be lowered by a motor to the lawn, the images from the digital camera (7) being fed to an algorithm implemented in the control device for carrying out object recognition, so that the control device lowers the tool (3, 5) when an object is detected in order to carry out a work step on the object, **characterized in that** the tool (3, 5) is arranged in a detection range of the camera (7) when in the lowered state, wherein a constant image coordinate of the camera image is assigned to a contact point of the tool (3, 5) with the lawn.

2. Device according to claim 1, **characterized in that** the algorithm is designed to detect the center point of a detected object, and wherein the control device is set up to output control commands to the mobile unit for approaching the object from a continuous determination of the distance between the constant image coordinate of the contact point of the tool (3, 5) and the center point of the detected object until the distance is below a predetermined limit value.

3. Device according to claim 1 or 2, **characterized in that** the control device is designed as a single-board computer.

4. Device according to any one of claims 1 to 3, **characterized in that** the tool is designed as a weeding device (3).

5. Device according to claim 4, **characterized in that** the weeding device (3) has one or more rotating blades (13) or a rotating cutting thread.

6. Device according to claim 4 or 5, **characterized in that** the weeding device (3) is arranged on an arm (2) pivotable about an axis (11) extending obliquely to the vertical up to approximately horizontally.

7. Device according to any one of claims 1 to 3, **characterized in that** the tool is designed as a gripper (5).

8. Device according to claim 7, **characterized in that** the gripper (5) is arranged on an arm (4) pivotable about a substantially horizontal axis.

9. Device according to claim 7 or 8, **characterized in that** the gripper (5) has at least two, in particular three, parallel gripping elements (22) which are guided so as to be movable towards and away from one another.

10. Device according to claim 9, **characterized in that** the movement of the gripping elements (22) runs along a respective circular arc, wherein pivot axes (23) forming the respective center of the circular arcs are arranged uniformly along a circle and parallel to one another.

11. Device according to claim 10, **characterized in that** a drive member (25) rotatably driven by a motor about the axis of the circle is provided, which is drivingly connected to each gripping element (22) in order to drive the latter along the respective circular arc of the circle.

12. Device according to claim 9, 10 or 11, **characterized in that** contact surfaces of the gripping elements (22) are anodized.

13. Device according to any one of claims 7 to 12, **characterized in that** the device further comprises a collecting container (17), which is arranged below a discharge position of the gripper (5).

14. Device according to any one of claims 1 to 13, **characterized in that** an electric motor drive is provided for lowering and raising the at least one tool (3, 5).

15. Device according to any one of claims 1 to 14, **characterized in that** the device is designed as an integral component or as a retrofit module for mounting on a robotic lawnmower (6) as the mobile unit.

16. Robot lawn mower with a mowing mechanism and an autonomously operating travel drive, wherein the robot lawn mower (6) is equipped with a device according to any one of claims 1 to 15.

17. Robot lawn mower according to claim 16, **characterized in that** the digital camera (7) is directed towards the lawn area lying in front of the mowing mechanism in the direction of travel.

## Revendications

1. Dispositif pour l'entretien des pelouses, qui peut être disposé sur une unité mobile et comprend une caméra numérique (7) orientable vers la pelouse, un dispositif de commande et au moins un outil (3, 5) motorisé et abaissable vers la pelouse, contrôlé par le dispositif de commande, dans lequel les images de la caméra numérique (7) sont alimentées dans un algorithme implémenté dans le dispositif de commande pour effectuer une reconnaissance d'objet, de sorte que le dispositif de commande abaisse l'outil (3, 5) lorsqu'un objet est reconnu, pour effectuer une étape de travail sur l'objet, **caractérisé en ce que** l'outil (3,5), à l'état abaissé, est disposé dans une zone de détection de la caméra (7), un point de contact de l'outil (3, 5) avec la pelouse étant associé à une coordonnée d'image constante de l'image de la caméra.

2. Dispositif selon la revendication 1, **caractérisé en ce que** l'algorithme est conçu pour détecter le centre d'un objet reconnu, et le dispositif de commande est configuré pour émettre des commandes de contrôle à l'unité mobile pour se rapprocher de l'objet à partir d'une détermination continue de la distance entre la coordonnée d'image constante du point de contact de l'outil (3, 5) et le centre de l'objet reconnu, jusqu'à ce que la distance soit inférieure à une valeur limite prédéfinie.

3. Dispositif selon la revendication 1 ou 2, **caractérisé en ce que** le dispositif de commande est conçu comme un ordinateur monocarte.

4. Dispositif selon l'une des revendications 1 à 3, **caractérisé en ce que** l'outil est conçu comme un dispositif de désherbage (3).

5. Dispositif selon la revendication 4, **caractérisé en ce que** le dispositif de désherbage (3) comprend une ou plusieurs lames rotatives (13) ou un fil de coupe rotatif.

6. Dispositif selon la revendication 4 ou 5, **caractérisé en ce que** le dispositif de désherbage (3) est disposé sur un bras (2) pivotant autour d'un axe (11) incliné obliquement jusqu'à approximativement horizontal par rapport à la verticale.

7. Dispositif selon l'une des revendications 1 à 3, **caractérisé en ce que** l'outil est conçu comme un préhenseur (5).

8. Dispositif selon la revendication 7, **caractérisé en ce que** le préhenseur (5) est disposé sur un bras (4) pivotant autour d'un axe essentiellement horizontal.

9. Dispositif selon la revendication 7 ou 8, **caractérisé en ce que** le préhenseur (5) comprend au moins deux, en particulier trois éléments de préhension parallèles (22) qui sont guidés pour pouvoir se rapprocher et s'éloigner les uns des autres.

10. Dispositif selon la revendication 9, **caractérisé en ce que** le mouvement des éléments de préhension (22) se déroule le long d'un arc de cercle respectif, les axes de pivotement (23) formant le centre respectif des arcs de cercle étant disposés uniformément le long d'un cercle et parallèlement les uns aux autres.

11. Dispositif selon la revendication 10, **caractérisé en ce qu'**un élément d'entraînement (25) entraîné en rotation motorisée autour de l'axe du cercle est prévu, lequel est connecté en termes d'entraînement à chaque élément de préhension (22) pour l'entraîner le long de l'arc de cercle respectif.

12. Dispositif selon la revendication 9, 10 ou 11, **caractérisé en ce que** les surfaces de contact des éléments de préhension (22) sont anodisées.

13. Dispositif selon l'une des revendications 7 à 12, **caractérisé en ce que** le dispositif comprend en outre un récipient de collecte (17) qui est disposé en dessous d'une position de chute du préhenseur (5).

14. Dispositif selon l'une des revendications 1 à 13, **caractérisé en ce qu'un** entraînement électromoteur est prévu pour abaisser et lever l'au moins un outil (3, 5).

15. Dispositif selon l'une des revendications 1 à 14, **caractérisé en ce que** le dispositif est conçu comme un élément intégral ou comme un module de mise à niveau à fixer sur un robot tondeuse (6) en tant qu'unité mobile.

16. Robot tondeuse avec une unité de tonte et un entraînement de déplacement autonome, le robot tondeuse (6) étant équipé d'un dispositif selon l'une des revendications 1 à 15.

17. Robot tondeuse selon la revendication 16, **caractérisé en ce que** la caméra numérique (7) est dirigée vers la pelouse située devant l'unité de tonte dans le sens de la marche.
